# FASCICULE DE BREVET EUROPEEN

(11) **EP 2 385 377 B1**
(45) Date de publication et mention de la délivrance du brevet: **27.11.2013**
(21) Numéro de dépôt: 11165222.8
(22) Date de dépôt: 09.05.2011
(51) Int. Cl.: G01P 5/16

(54) **Dispositif de contrôle d'une sonde de mesure de pression d'un écoulement et sonde comprenant le dispositif**
Kontrollsystem einer Druckmesssonde für eine Strömung, und diese Vorrichtung umfassende Sonde
Device for controlling a probe for measuring the pressure of a flow and probe including the device

(30) Priorité: 07.05.2010 FR 1001970
(43) Date de publication de la demande: 09.11.2011
(73) Titulaire: Thales, 92200 Neuilly Sur Seine (FR)
(72) Inventeur: Leblond, Henri, 78000 Versailles (FR); Guichard, Philippe, 26120 Chabeuil (FR); Pineau, Jean-Philippe, 41190 Landes le Gaulois (FR)
(74) Mandataire: Collet, Alain

(56) Documents cités:
- US-A1- 2007 280 046

## Description

L'invention concerne un dispositif de contrôle d'une sonde à mesure de pression d'un écoulement et une sonde comprenant le dispositif. Le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt, ainsi que de capteurs de mesure de l'angle d'incidence α et de l'angle de dérapage β.α et β fournissent la direction du vecteur de vitesse dans un système de référence, ou référentiel, lié à l'aéronef et Pt - Ps fournit le module de ce vecteur vitesse. Les quatre paramètres aérodynamiques permettent donc de déterminer le vecteur vitesse de tout aéronef, tel que par exemple un avion ou un hélicoptère.

La mesure de la pression totale Pt se fait habituellement à l'aide d'un tube dit de Pitot. Il s'agit d'un tube ouvert à l'une de ses extrémités et obstrué à l'autre. L'extrémité ouverte du tube fait sensiblement face à l'écoulement.

Le filet d'air situé en amont du tube est progressivement ralenti jusqu'à atteindre une vitesse quasi nulle à l'entrée du tube. Le ralentissement de la vitesse de l'air augmente la pression de l'air. Cette pression augmentée forme la pression totale Pt de l'écoulement d'air. A l'intérieur du tube de Pitot, on mesure la pression d'air qui y règne.

En pratique, l'écoulement d'air peut véhiculer des particules solides ou liquides, comme par exemple l'eau des nuages, susceptibles de pénétrer dans le tube de Pitot et de s'accumuler dans le tube au niveau de l'extrémité obstruée. Pour éviter qu'une telle accumulation ne vienne perturber la mesure de pression, on prévoit en général au niveau de l'extrémité obstruée, un ou plusieurs trous de purge et ainsi que des pièges à eau, pour éviter tout risque d'obstruction des canalisations chargées de transmettre la pression totale aux capteurs de pression situés à l'intérieur de la peau de l'aéronef ou aux instruments de la planche de bord de l'aéronef.

Les trous de purge permettent d'évacuer les liquides et les éventuelles particules pouvant pénétrer dans le tube. Ces trous trouvent une utilité particulière en cas de vols dans une atmosphère chargée d'eau, que ce soit pour de l'eau à l'état liquide, ou de l'eau à l'état solide pouvant se former en conditions givrantes.

Dans ce trou, circulent à la fois de l'eau, les particules et une partie de l'air entrée dans le tube de Pitot. Ainsi, le ralentissement de l'air dans le tube n'est pas complet et la mesure de pression totale Pt s'en trouve altérée. Plus précisément, plus on cherche à éviter l'accumulation d'eau ou de particules de taille importante, plus on altère la mesure de pression totale en augmentant les dimensions du trou de purge. Inversement, plus on cherche à améliorer la mesure de pression totale Pt en diminuant les dimensions du trou de purge, plus le risque d'accumulation d'eau ou de particules augmente. Avec un tube de Pitot, on est donc tenu de réaliser un compromis entre qualité de la mesure de pression totale Pt et risque de perturbation de la mesure du fait de la pénétration d'eau, et de particules véhiculées par l'écoulement d'air où la mesure est réalisée. Il n'est donc pas possible d'augmenter fortement les dimensions des trous de purge pour améliorer leur efficacité.

Dans la vie opérationnelle des aéronefs, les trous de purges se polluent, du fait d'ingestion de poussière, d'insectes, de résidus de végétaux ou autres corps étrangers. Du fait de leur taille et de la position des tubes de Pitot sur le fuselage d'un aéronef, le contrôle périodique de l'intégrité des trous de purges est malaisé. Il n'est pas prévu de vérification de ces trous avant chaque vol et le contrôle est impossible durant le vol, ce qui peut avoir un impact sur la sécurité du vol.

La vérification des trous de purge des tubes de Pitot se fait actuellement de manière visuelle. L'opérateur chargé de la maintenance des avions inspecte le ou les trous de purge à l'aide d'une petite lampe. En cas d'observation de corps étrangers ou d'anomalie, la sonde est démontée, et ses circuits pneumatiques nettoyés. Cette opération est d'autant plus malaisée que l'avion est de grande taille. L'accès à la sonde et aux trous de purge dont le diamètre est généralement de moins de 1 mm de diamètre est difficile. Aussi, l'opération ne s'effectue que rarement. Il est fréquent que les périodicités de contrôle soient supérieures à une année.

Bien entendu, de tels intervalles de temps ne sont pas acceptables pour des avions évoluant dans des contrées ou l'atmosphère est fortement polluée, lorsque l'on est en présence de tempêtes de sable, de nuages volcaniques ou plus simplement dans des régions où la présence d'insectes constructeurs, telles que des guêpes maçonnes, est forte.

Il arrive fréquemment que les pilotes d'avion rapportent des problèmes de fluctuation de mesure de vitesse lors de vols ayant rencontré de fortes précipitations.

Des solutions ont été proposées pour diminuer l'impact des inconvénients liés aux trous de purges.

On peut citer les sondes de pressions dont le principe de fonctionnement permet de ménager un circuit de purge de grande section, tel que décrit par exemple dans le brevet publié sous le n° FR 2 823 846 et déposé le 24 avril 2001. Il s'agit d'une sonde de mesure de pression totale à point d'arrêt fluide. Plus précisément, cette sonde prélève au moins deux filets d'air dans un écoulement d'air et les amène au contact l'un de l'autre de façon à les ralentir. On mesure la pression dans la zone où l'air est ralenti et cette pression mesurée donne la pression totale de l'écoulement. Cette sonde permet d'augmenter notablement les dimensions des trous de purge. Mais cette solution présente l'inconvénient d'impacter significativement la conception et les modes de défaillances intrinsèques de la fonction sonde de pression, et donc d'être beaucoup plus longue à certifier et à mettre en oeuvre en série sur les aéronefs en service.

Par ailleurs, la mesure de la pression statique se fait à l'aide d'une sonde affleurant la peau de l'aéronef et possédant un conduit s'ouvrant sensiblement perpendiculaire à la direction de l'écoulement et à l'intérieur duquel on mesure la pression de l'air.

Il arrive que certaines impuretés se déposent sur des parois internes du conduit. Avec le temps, les impuretés déposées créent des amas d'impuretés qui se fixent aux parois internes et qui peuvent perturber la circulation du fluide dans le conduit par une modification de sa géométrie. Ces dépôts d'impuretés et ces formations d'amas se rencontrent assez fréquemment lorsque le débit de fluide dans le conduit n'est pas suffisant pour déplacer des impuretés déposées. Les dépôts sont causés soit par une adhésion d'impuretés aux parois internes de conduits soit par des accumulations d'impuretés liées à des micro-turbulences, dans des zones de calme du lit fluide.

En cas d'obstruction partielle des conduits d'entrée d'air d'une telle sonde, c'est le temps de réponse de la sonde qui est affecté, en cas d'obstruction totale, la mesure de pression statique est elle-même faussée. Pour ce type de sonde, on a développé un dispositif d'auto nettoyage des parois interne décrit dans le brevet n ° FR 2 910 357 déposé le 20 décembre 2006. Ce dispositif a pour objet de prévenir et dans une certaine mesure éliminer les phénomènes de bouchage. Ces sondes permettent d'utiliser le principe de modification de l'impédance motionnelle de l'élément moteur pour détecter un bouchage partiel ou total du conduit concerné. Elles présentent l'inconvénient de ne tester que les volumes intérieurs qui sont équipés du dispositif de débouchage ; par exemple, si seuls les trous de purge sont équipés, on ne détecte pas un bouchage du nez de la sonde par lequel le flux d'air pénètre dans la sonde.

L'invention vise à pallier tout ou partie des problèmes cités plus haut en permettant un contrôle automatique ou semi-automatique de la non-obstruction des cavités internes et des trous de purges de sondes de pression existantes, notamment les sondes de pression statique, les tubes de Pitot, les sondes Pitot/statique et les sondes d'incidence partiellement ou totalement pneumatique. L'invention permet un contrôle lors des opérations de maintenance périodique, lors de contrôles avant vol, voir même en temps réel en vol.

A cet effet, l'invention a pour objet un dispositif de contrôle d'une sonde à mesure de pression d'un écoulement, selon la revendication 1.

Dans un mode de réalisation préféré, la connexion de l'émetteur et du récepteur acoustiques au volume interne est réalisée de façon temporaire. En d'autres termes le dispositif est un outillage de contrôle pouvant être mis en oeuvre sur des sondes existantes.

Un exemple de sonde das laquelle est intégré à demeure un dispositif de contrôle accoustique est décrit dans le document US 2007/280046 A1. Le dispositif de contrôle ou la sonde équipée du dispositif permet un contrôle de l'ensemble du circuit pneumatique duquel fait partie le volume interne de la sonde. En effet, si le volume interne de la sonde est raccordé au moyen d'un connecteur pneumatique à d'autres instruments de l'aéronef, tel que par exemple un calculateur de données aéronautiques, bien connu dans la littérature anglo-saxonne sont le nom de ADC pour « Air Data Computeur », le signal acoustique se propage alors jusqu'à ces instruments. Toute anomalie du circuit pneumatique peut être détectée par le dispositif de contrôle.

Un dispositif autonome peut être employé pour tout type de sonde existante. Un dispositif intégré permet de réaliser une opération de contrôle de la sonde sans nécessité d'intervenir directement au voisinage de la sonde. Il est possible de piloter l'émetteur à distance et de déporter le résultat de la comparaison entre le signal acoustique observé reçue par le récepteur et le signal de référence. Une telle opération de contrôle peut même être effectuée durant un vol d'un aéronef équipé de la sonde. On pendra simplement soin de tenir compte de la pression atmosphérique et de la température de l'écoulement, pour éventuellement adapter le dispositif de mesure à cette pression et cette température.

L'invention sera mieux comprise et d'autres avantages apparaîtront à la lecture de la description détaillée d'un mode de réalisation donné à titre d'exemple, description illustrée par le dessin joint dans lequel :
la figure 1 représente une sonde de mesure de pression totale ;
la figure 2 représente une vue partielle de la sonde de la figure 1 au voisinage de laquelle un dispositif de contrôle selon l'invention est disposé ;
la figure 3 représente une vue partielle d'une sonde de mesure de pression totale dans laquelle est intégré un dispositif de contrôle selon l'invention. Cette sonde ne fait pas partie de l'invention revendiquée.

Par souci de clarté, les mêmes éléments porteront les mêmes repères dans les différentes figures.

L'invention est décrite en rapport à une sonde de mesure de pression totale. Il est bien entendu possible de la mettre en oeuvre pour une sonde de mesure de pression statique, pour une sonde Pitot/statique ou pour une sonde d'incidence totalement ou partiellement pneumatique.

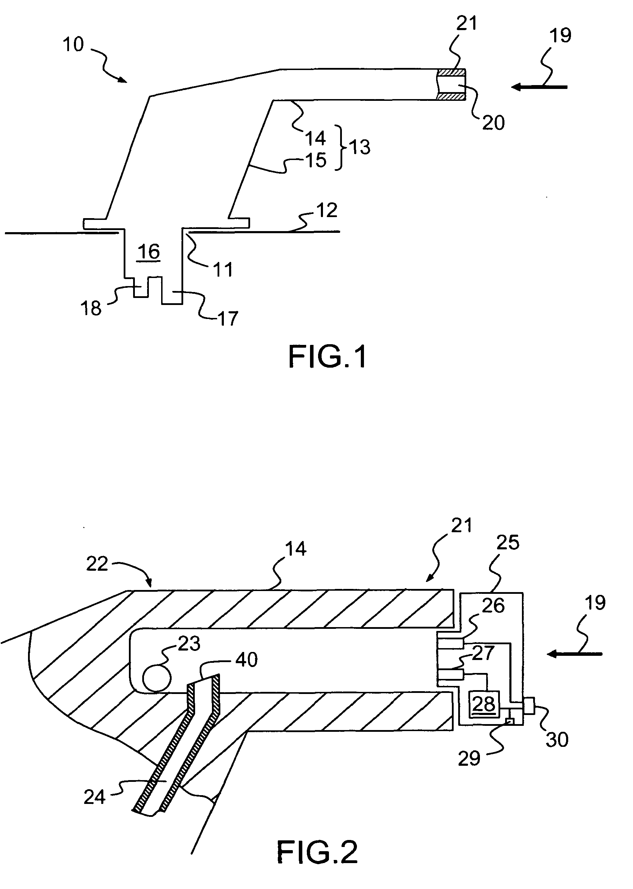

La figure 1 représente une sonde de mesure de pression totale 10 destinée à être fixée en traversée d'une ouverture 11 réalisée dans la peau 12 d'un aéronef. La sonde 10 comprend une partie externe 13 à la peau 12 et formée par un tube de Pitot 14 porté par un mat 15. La sonde 10 comprend également une partie interne 16 comportant essentiellement un connecteur électrique 17 et un connecteur pneumatique 18. Le connecteur 17 permet de raccorder électriquement la sonde 10 à l'aéronef, notamment pour raccorder des moyens de réchauffage pour le dégivrage de la sonde 10. Ces moyens de dégivrage comprennent par exemple une résistance chauffante entourant notamment le tube de Pitot 14 et permettant à l'aéronef de voler dans un environnement où du givre est susceptible de se former. Le connecteur 18 permet le raccordement pneumatique du tube de Pitot 14 à un capteur de pression ou autre dispositif de mesure, situé à l'intérieur de la peau 12 de l'aéronef. La sonde 10 est positionnée sur la peau 12 de l'aéronef de telle sorte que le tube de Pitot 14 soit orienté sensiblement suivant un axe longitudinal de l'aéronef, hors couche limite, pour que la direction de l'écoulement, matérialisé par une flèche 19, fasse sensiblement face à un orifice d'entrée 20 situé à une première extrémité 21 du tube de Pitot 14.

Dans l'exemple représenté, le tube de Pitot 14 est fixe par rapport à la peau 12 de l'aéronef. Il est bien entendu possible de monter le tube de Pitot 14 sur un mat mobile comme par exemple une palette pouvant s'orienter dans l'axe de l'écoulement comme par exemple décrit dans le brevet publié sous le n° FR 2 665 539 et déposé le 3 août 1990. Ainsi lorsque l'incidence locale de l'écoulement au voisinage de la sonde 10 évolue, l'orientation du tube de Pitot 14 suit cette incidence afin de toujours faire face à l'écoulement. La mesure de pression totale s'en trouve améliorée lors de variation d'incidence locale.

La figure 2 représente plus en détail le tube de Pitot 14 formant la partie de la sonde la plus éloignée de la peau 12 de l'aéronef. Les moyens pour mesurer la pression totale comportent un premier tube 14, avantageusement à section circulaire, dit tube de Pitot orienté sensiblement suivant l'axe 19 de l'écoulement d'air. A l'extrémité 22 du tube 14, extrémité 22 opposée à l'extrémité 21, le tube 14 comporte un trou de purge 23 permettant d'évacuer des particules susceptibles de pénétrer à l'intérieur du tube 14. Toujours au niveau de l'extrémité 22 du tube, un canal pneumatique 24 s'ouvre dans le tube 14 pour y former une prise de pression 40 au niveau de laquelle on cherche à mesurer la pression d'air. La prise de pression 40 est généralement construite de façon à éviter l'ingestion d'eau dans le tube 14 et former ainsi un piège a eau. Le canal 24 est par exemple relié à un capteur de pression non représenté sur la figure 2. Le capteur de pression permet de mesurer de façon effective la pression de l'air régnant à l'intérieur du tube 14 au niveau de son extrémité 22. Le capteur de pression peut appartenir à la sonde ou bien être déporté. Dans ce cas, le capteur de pression est raccordé à la sonde 31 au moyen du connecteur pneumatique 18. Hormis le trou de purge 23, dont la section est faible par rapport à celle du tube 14, le tube 14 est fermé au niveau de son extrémité 22. La pression mesurée au niveau de cette extrémité représente donc la pression totale Pt de l'écoulement d'air.

Selon l'invention, un dispositif de contrôle 25 de la sonde 10 est disposé au voisinage de l'extrémité 21 du tube 14. Le dispositif de contrôle 25 comprend un émetteur 26 et un récepteur 27 acoustiques. L'émetteur 26 est destiné à émettre un signal acoustique se propageant à l'intérieur du tube 14. Le récepteur 27 est destiné à capter un signal acoustique dans le tube 14. Le signal capté par le récepteur 27 est appelé signal acoustique observé. Avantageusement l'émetteur 26 et le récepteur 27 peuvent être un seul et même élément piézo-électrique par exemple. L'intérieur du tube 14 entre ces deux extrémités 21 et 22, le trou de purge 23 et le canal 24 forment un volume interne de la sonde 10. L'émetteur 26 et le récepteur 27 sont connectés au volume interne de façon à ce que le signal acoustique émis se propage dans le volume interne et de façon à ce que le récepteur 27 capte le signal acoustique observé dans le volume interne.

La forme géométrique du volume interne et les diverses connexions de ce volume avec les autres parties du circuit pneumatique affectent le signal acoustique observé dans le volume. Le signal observé, reçu par le récepteur 27, dépend donc d'éventuelles particules se trouvant dans le volume interne et notamment, lorsque le trou de purge 23 est obstrué. On peut définir un signal de référence que le récepteur 27 reçoit lorsque le volume interne est exempt de toute particule. Le dispositif de contrôle 25 comprend par ailleurs, des moyens de comparaison 28 du signal de référence avec le signal observé lors de l'analyse de la sonde en cours de test. Ce signal de référence peut être défini sur une sonde 10 neuve ou après un contrôle visuel approfondi d'une sonde 10. Si le dispositif est utilisé pour une sonde 10 montée sur un aéronef, le signal de référence peut dépendre de l'aéronef lui-même et en particulier de la partie du circuit pneumatique n'appartenant pas à la sonde 10.

Un écart entre le signal observé et le signal de référence permet d'établir la présence de particule dans le volume interne. En cas de détection de particule une opération de maintenance sur la sonde 10 est nécessaire pour ôter les particules présentes. Au contraire, si l'écart n'est pas significatif, la sonde 10 est considérée comme opérationnelle. La réalisation d'un tel contrôle est très rapide à mettre en oeuvre. Ce contrôle peut être réalisé directement sur l'aéronef sans démontage de la sonde 10. Ce contrôle peut également être effectué lors d'une opération de maintenance de la sonde 10 afin de vérifier que les particules, notamment celle pouvant obstruer le trou de purge 23, ont bien été ôtées.

Avantageusement, le dispositif de contrôle 25 comprend des moyens d'information si un écart entre le signal observé et le signal de référence dépasse un seuil prédéfini. Le seuil prédéfini peut être stocké dans une mémoire du dispositif de contrôle 25. Le seuil peut être défini à l'aide d'essais en testant des tailles de particules différentes insérées dans le volume interne, à différents emplacements de celui-ci. Les moyens d'informations peuvent être formés par un voyant 29 qu'un opérateur peut observer pendant une opération de contrôle. Les moyens d'informations peuvent également être déportés au moyen d'un connecteur 30 du dispositif 25.

Lors d'une opération de contrôle au moyen du dispositif 25, on peut, par exemple, rechercher une fréquence de résonance du volume interne. Cette fréquence est fonction d'une éventuelle obstruction du trou de purge 23 ou de particules présentes dans le volume interne. Avantageusement le signal acoustique émis par l'émetteur 26 peut être le signal acoustique obtenu en balayant une bande de fréquence donnée. Le signal acoustique observé par le récepteur 27 est comparé sur la bande de fréquence à un spectre de référence. La bande de fréquence peut couvrir des fréquences acoustiques étendues adaptées au type de sonde et plus généralement au circuit pneumatique complet.

La figure 3 représente une vue partielle d'une sonde 31 de mesure de pression totale dans laquelle est intégré un dispositif de contrôle 32. Le dispositif 32 comprend comme le dispositif 25 un émetteur 26 et un récepteur 27. La sonde comprend le dispositif 32 qui est raccordé au canal 24, par exemple au moyen d'un T de raccordement 33 situé entre le tube de Pitot 14 et le connecteur pneumatique 18. Autrement dit, le raccordement du dispositif 32 est réalisé sur le canal 24 entre la prise de pression 40 et le capteur de pression. Le dispositif 32 est disposé à l'intérieur d'un corps 41 de la sonde. Le raccordement du dispositif 32 sur le canal 24 permet à l'émetteur 26 et au récepteur 27 de communiquer avec le canal 24 et donc avec l'ensemble du volume interne de la sonde 31. La propagation du signal acoustique se fait dans le canal 24 et dans le tube de Pitot 14. Une éventuelle obstruction du trou de purge 23 altère le signal acoustique. Le dispositif 32 peut comprendre les moyens de comparaisons 28. Ces moyens peuvent aussi être déportés de la sonde 31. Ce déport peut être réalisé au travers du connecteur électrique 17 au moyen d'une liaison 34. Pour la sonde 31, les moyens d'information sont avantageusement déportés dans le cockpit de l'aéronef équipé de la sonde 31.

## Revendications

1. Outillage de contrôle autonome d'une sonde (10) à mesure de pression d'un écoulement, la sonde (10) comprenant un volume interne (14, 23, 24) et au moins un orifice (20, 33) de communication avec l'extérieur du volume (14, 23, 24), l'outillage pouvant être employé pour tout type de sonde existante, l'outillage comprenant :
• un émetteur (26) et un récepteur (27) acoustiques destinés à être connecté au volume interne (14, 23, 24), de façon à ce que l'émetteur (26) émette un signal acoustique se propageant dans le volume interne (14, 23, 24) et de façon à ce que le récepteur (27) capte un signal acoustique observé dans le volume interne (14, 23, 24),
• et des moyens de comparaison (28) du signal acoustique observé dans le volume interne (14, 23, 24) à un signal acoustique de référence.

2. Outillage selon la revendication 1, **caractérisé en ce qu'**il comprend des moyens d'information (29) si un écart entre le signal acoustique observé et le signal de référence dépasse un seuil prédéfini.

3. Outillage selon l'une des revendications précédéntes, **caractérisé en ce que** le signal acoustique émis balaye une bande de fréquence donnée et **en ce que** le signal acoustique observé est comparé sur la bande de fréquence à un spectre de référence.

4. Outillage selon l'une des revendications précédentes, **caractérisé en ce qu'**il est destiné à réaliser le contrôle d'une sonde de pression totale (10), de pression statique, de Pitot/statique ou d'incidence totalement ou partiellement pneumatique.

5. Outillage selon l'une des revendications précédentes, **caractérisé en ce qu'**il est destiné à être connecté au volume interne (14, 23, 24) au voisinage d'un orifice d'entrée (20) d'un filet d'air de l'écoulement dans la sonde (10).

## Patentansprüche

1. Gerät zum autonomen Prüfen einer Strömungsdruckmesssonde (10), wobei die Sonde (10) ein Innenvolumen (14, 23, 24) und wenigstens ein Verbindungsloch (20, 33) zur Außenseite des Volumens (14, 23, 24) hat, wobei das Gerät zur Verwendung mit einem beliebigen existierenden Sondentyp ausgelegt ist und wobei das Gerät folgendes umfasst:
• einen akustischen Sender (26) und einen akustischen Empfänger (27) zum Verbinden mit dem Innenvolumen (14, 23, 24), so dass der Sender (26) ein akustisches Signal sendet, das sich im Innenvolumen (14, 23, 24) ausbreitet, und so dass der Empfänger (27) ein im Innenvolumen (14, 23, 24) beobachtetes akustisches Signal erfasst;
• und Mittel zum Vergleichen (28) des im Innenvolumen (14, 23, 24) beobachteten akustischen Signals mit einem akustischen Referenzsignal.

2. Gerät nach Anspruch 1, **dadurch gekennzeichnet, dass** es Mittel zum Informieren (29) umfasst, wenn eine Differenz zwischen dem beobachteten akustischen Signal und dem Referenzsignal eine vordefinierte Schwelle übersteigt.

3. Gerät nach einem der vorherigen Ansprüche, **dadurch gekennzeichnet, dass** das gesendete akustische Signal ein gegebenes Frequenzband überstreicht, und dadurch, dass das beobachtete akustische Signal auf dem Frequenzband mit einem Referenzspektrum verglichen wird.

4. Gerät nach einem der vorherigen Ansprüche, **dadurch gekennzeichnet, dass** es zum Prüfen einer ganz oder teilweise pneumatischen Sonde für Gesamtdruck (10), statischen Druck, Pitot/Statik oder Einfall ausgelegt ist.

5. Gerät nach einem der vorherigen Ansprüche, **dadurch gekennzeichnet, dass** es zum Verbinden mit dem Innenvolumen (14, 23, 24) in der Nähe eines Luftstromeinlasslochs (20) in die Sonde (10) ausgelegt ist.

## Claims

1. An apparatus for autonomously checking a flow pressure measurement probe (10), said probe (10) comprising an internal volume (14, 23, 24) and at least one hole (20, 33) for communicating with the outside of said volume (14, 23, 24), said apparatus being designed to be used with any type of existing probe and said apparatus comprising:
• an acoustic transmitter (26) and an acoustic receiver (27) designed to be connected to said internal volume (14, 23, 24) so that said transmitter (26) transmits an acoustic signal propagating inside said internal volume (14, 23, 24) and so that said receiver (27) captures an acoustic signal observed in said internal volume (14, 23, 24);
• and means for comparing (28) said acoustic signal observed inside said internal volume (14, 23, 24) with a reference acoustic signal.

2. The apparatus according to claim 1, **characterised in that** it comprises means for providing information (29) if a difference between said observed acoustic signal and said reference signal exceeds a predefined threshold.

3. The apparatus according to any one of the preceding claims, **characterised in that** said transmitted acoustic signal scans a given frequency band, and **in that** said observed acoustic signal is compared on the frequency band with a reference spectrum.

4. The apparatus according to any one of the preceding claims, **characterised in that** it is designed to check a fully or partially pneumatic probe for total pressure (10), static pressure, Pitot/static or incidence.

5. The apparatus according to any one of the preceding claims, **characterised in that** it is designed to be connected to said internal volume (14, 23, 24) in the vicinity of an inlet hole (20) of an air stream flowing into said probe (10).
